# FASCICULE DE BREVET EUROPEEN

(11) **EP 3 391 271 B1**
(45) Date de publication et mention de la délivrance du brevet: **25.09.2019**
(21) Numéro de dépôt: 16806204.0
(22) Date de dépôt: 12.12.2016
(51) Int. Cl.: G06F 21/52

(54) **PROCÉDÉ DE SÉCURISATION D'AU MOINS UNE ZONE MÉMOIRE D'UN DISPOSITIF ÉLECTRONIQUE, MODULE DE SÉCURISATION, DISPOSITIF ÉLECTRONIQUE ET PROGRAMME D'ORDINATEUR CORRESPONDANTS**
VERFAHREN ZUR BEFESTIGUNG VON MINDESTENS EINER SPEICHERZONE EINER ELEKTRONISCHEN VORRICHTUNG UND SICHERHEITSMODUL, ELEKTRONISCHE VORRICHTUNG UND COMPUTERPROGRAMM
METHOD FOR SECURING AT LEAST ONE MEMORY ZONE OF AN ELECTRONIC DEVICE, AND CORRESPONDING SECURITY MODULE, ELECTRONIC DEVICE AND COMPUTER PROGRAM

(30) Priorité: 15.12.2015 FR 1562428
(43) Date de publication de la demande: 24.10.2018
(73) Titulaire: Ingenico Group, 75015 Paris (FR)
(72) Inventeur: NACCACHE, David, 75016 Paris (FR); GERAUD, Rémi, 75018 Paris (FR); KOUDOUSSI, Hiba, 75012 Paris (FR)
(74) Mandataire: Vidon Brevets & Stratégie
(86) Numéro de dépôt international: PCT/EP2016/080684
(87) Numéro de publication internationale: WO 2017/102663

(56) Documents cités:
- US-A1- 2012 254 995
- US-A1- 2014 095 821

## Description

### 1. Domaine

La technique proposée se rapporte à la protection contre la lecture ou l'utilisation de données résiduelles en mémoire d'un dispositif électronique, plus particulièrement au sein d'un système embarqué présentant une puissance de calcul limitée.

Une application de l'invention concerne la protection contre la prise de contrôle par une entité non autorisée du flot d'exécution d'un programme, lorsque celle-ci tente d'accéder à une zone mémoire désallouée.

### 2. Art Antérieur

Sur les systèmes d'exploitation modernes, une gestion fine de la segmentation de la mémoire permet de détecter une tentative de prise de contrôle du flot d'exécution d'un programme. Lorsqu'une telle tentative est détectée, par exemple lorsque le pointeur d'instruction sort d'un périmètre déterminé, une erreur est lancée et le programme responsable est terminé afin d'éviter tout risque de piratage. Cela impacte cependant les performances du système.

Ainsi, une technique connue de contre-mesure permettant d'implémenter cette approche consiste à isoler les processus en médiatisant chaque accès à la mémoire, on parle alors de mémoire virtuelle. Les opérations de traduction entre la mémoire virtuelle et la mémoire réelle (dite « physique ») sont coûteuses, si bien qu'un composant matériel dédié est ajouté pour les effectuer, il s'agit d'unité de gestion mémoire de type « MMU » (pour « *Memory Management Unit* ») par exemple. En dépit de ces mesures, il est possible pour un programme d'avoir accès à de la « mémoire non initialisée » qui contient en fait des données appartenant à d'autres programmes défunts, potentiellement stratégiques.

De plus, dans le cas précis d'un système d'exploitation restreint (encore appelé « kernel ») ou temps-réel (également appelé « RTOS » pour « *Real Time Operating system* » en anglais), il est courant au contraire que tous les processus partagent une même vue de la mémoire, dans laquelle la vérification mentionnée précédemment (de traduction entre mémoire virtuelle et mémoire physique) ne peut pas être effectuée. En effet, si le système est limité par ailleurs, l'impact supplémentaire de ces contre-mesures sur la performance n'est plus acceptable.

En revanche, l'absence de telles contre-mesures ouvre un vecteur d'attaque car une entité non autorisée et mal intentionnée peut non seulement sortir des zones mémoires qui lui sont réservées, mais peut également invoquer des morceaux de code de programmes « morts ». En pratique, des contraintes opérationnelles sont mises en place pour limiter le risque d'attaque : le code est écrit uniquement par des personnes bien identifiées, les programmes sont certifiés et subissent des vérifications, des tests sont effectués, l'appareil se bloque si un problème est détecté, etc. Cependant, outre le coût supplémentaire qu'imposent ces contraintes opérationnelles, elles ne sont toutefois pas infaillibles et - par erreur ou par malice - des incidents peuvent néanmoins se produire, en particulier dans un système complexe et en interaction.

Il existe donc un besoin de fournir une solution permettant de résister aux attaques logicielles visant à prendre le contrôle du flot d'exécution d'un programme ou à lire des données résiduelles dans une mémoire d'un dispositif électronique, en particulier dans le cas où l'environnement ne dispose pas de contre-mesures (par exemple des architectures ARM) ni de protection de segmentation (par exemple des environnements RTOS), tout en assurant des performances optimales en particulier pour un dispositif électronique disposant d'une puissance de calcul limitée. Le document d'art antérieur US2012/0254995-A1 divulgue un système de protection d'un appareil électronique contre les logiciels malveillants dans lequel un agent de sécurité exécuté à un niveau privilégié surveille l'exécution des logiciels sur ledit appareil électronique.

Le document d'art antérieur US2014/0095821-A1 divulgue une méthode consistant à créer une machine virtuelle afin de protéger un système contre les actes malveillants.

### 3. Résumé

L'invention propose une solution nouvelle qui ne présente pas l'ensemble de ces inconvénients de l'art antérieur, sous la forme d'un procédé de sécurisation d'au moins une zone mémoire d'un dispositif électronique.

Selon l'invention, le procédé de sécurisation comprend les étapes suivantes :
- détection d'une désallocation d'au moins une portion de la zone mémoire, dite portion désallouée ;
- remplacement d'au moins une partie de la portion désallouée par au moins une instruction prédéterminée, dite instruction d'alerte, ou au moins une combinaison d'instructions prédéterminées, dite combinaison d'instructions d'alerte ;
- marquage de la portion désallouée.

Ainsi, l'invention propose une solution nouvelle et inventive de la protection de zones mémoire en mettant en oeuvre une technique spécifique de désallocation de zones mémoire, permettant notamment de détecter des tentatives d'utilisation non autorisées d'une zone mémoire désallouée.

Pour ce faire, l'invention prévoit de sécuriser une zone mémoire en déclenchant, sur détection d'une requête de désallocation d'une portion de cette zone mémoire (ou de toute la zone mémoire) le remplacement de tout ou partie de la portion de zone mémoire désallouée par une instruction ou suite d'instructions prédéterminées (destinées, comme décrit ci-après, à déclencher un programme d'alerte), et puis le marquage de la portion de zone désallouée, de manière à ce qu'elle soit reconnue comme non prioritaire, lors d'une requête d'allocation, par rapport à une zone mémoire non marquée.

Par exemple, l'instruction ou la suite d'instructions utilisée, dite instruction d'alerte, correspond à une instruction de saut vers un programme d'alerte, et le remplacement des octets de la portion désallouée est mis en oeuvre de façon à ce que tout accès (écriture ou lecture) à cette portion désallouée revienne à lancer le programme d'alerte. Si une instruction de saut s'écrit sur un octet, alors chaque octet de la portion désallouée est remplacé par cette instruction de saut. Selon la taille de l'instruction de saut, ou de la combinaison d'instructions de saut, les octets de la portion de zone mémoire désallouée sont remplacés octet par octet, ou par groupe d'octets.

De plus, le marquage de la portion désallouée, technique connue en soi, permet d'indiquer au système d'exploitation du dispositif électronique, pour une future allocation de mémoire, que cette zone mémoire a été récemment désallouée et ne doit donc pas être réallouée en priorité, dans la mesure du possible. Ainsi, de nouvelles règles de réallocation sont définies, donnant la priorité à une zone mémoire non marquée, par rapport à une zone mémoire marquée selon l'invention. Il est rappelé que ce marquage n'est lisible, et modifiable, que par le système d'exploitation du dispositif électronique ce qui constitue une sécurisation supplémentaire.

Selon un aspect particulier de l'invention, le procédé de sécurisation comprend une étape préalable de détermination de la taille de la portion désallouée et :
- lorsque la taille déterminée est inférieure à un seuil prédéterminé, l'étape de remplacement remplace tous les octets de la portion désallouée par au moins une instruction d'alerte ou au moins une combinaison d'instructions d'alerte, et le marquage délivre une zone mémoire marquée sécurisée ;
- lorsque la taille déterminée est supérieure à un seuil prédéterminé, l'étape de remplacement remplace au moins les n premiers et les m derniers octets de la portion désallouée par au moins une instruction d'alerte ou au moins une combinaison d'instructions d'alerte, avec *n* et *m* des entiers prédéterminés supérieurs à zéro, et le marquage délivre une zone mémoire marquée non sécurisée.

Ainsi, selon ce mode de réalisation, les étapes mises en oeuvre tiennent compte de la taille de la zone mémoire désallouée, de façon à optimiser le temps de traitement, tout en permettant une sécurisation optimale de la zone mémoire désallouée.

Pour ce faire, si la taille de la zone mémoire désallouée est inférieure à un seuil prédéterminé (par exemple trente deux octets), alors l'étape de remplacement consiste à remplacer toute la portion désallouée par une ou plusieurs instructions d'alerte, puis à marquer cette portion de zone désallouée comme étant une zone sécurisée. En effet, le remplacement de trente deux octets par une ou plusieurs instructions de saut par exemple est rapide et n'est pas préjudiciable au fonctionnement du dispositif électronique.

En revanche, si la portion de zone mémoire désallouée est supérieure à un seuil prédéterminé (par exemple trente deux octets), il est préférable de différer le remplacement total de cette portion de mémoire par des instructions d'alerte, de façon à ne pas détériorer les performances du dispositif électronique. En revanche, il est utile de commencer à remplacer certains octets, par exemple un certain nombre des premiers et derniers octets de la portion de mémoire. En effet, lorsque l'on cherche à accéder à une zone mémoire, il est connu de chercher d'abord les premiers octets disponibles, d'où l'idée de remplacer un certain nombre des premiers octets de la zone mémoire désallouée. De même, il est préférable de remplacer également les derniers octets, car une entité malintentionnée capable de contrôler le pointeur d'instruction uniquement de manière approximative (une entité malintentionnée peut tout à fait tolérer que quelques instructions sans importance s'exécutent avant la partie qui l'intéresse) est ainsi détectée.

Par ailleurs, tant que tous les octets de la portion désallouée ne sont pas remplacés par des instructions d'alerte, la portion de mémoire désallouée est marquée comme non sécurisée, de manière à ce qu'il ne soit pas autorisé de l'allouer.

De plus, lorsque la taille déterminée est supérieure à un seuil prédéterminé, le procédé de sécurisation comprend :
- un nombre prédéterminé d'itérations de l'étape de remplacement, le nombre prédéterminé d'itérations étant adapté pour remplacer tous les octets de la portion désallouée, et,
- lorsque tous les octets de la portion désallouée sont remplacés, une étape de modification du marquage de la portion désallouée délivrant une zone mémoire marquée sécurisée.

Ainsi, selon ce mode de réalisation, lorsque la portion de zone mémoire désallouée est trop grande, plusieurs étapes successives de remplacement de ses octets par des instructions d'alerte sont mises en oeuvre, en différé, lorsque le dispositif dispose de temps pour le faire.

De plus, lorsque tous les octets ont été remplacés, le marquage de la portion désallouée est modifié et elle est marquée comme étant sécurisée. Il devient alors possible, selon les règles d'allocation prédéfinies, d'allouer une telle zone mémoire, mais non prioritairement par rapport à une zone non marquée.

Selon une caractéristique particulière de l'invention, le procédé de sécurisation comprend une étape préalable d'écriture, dans au moins une zone mémoire protégée du dispositif électronique, distincte de la zone mémoire à sécuriser, d'au moins un programme d'alerte exécuté via l'exécution de l'instruction d'alerte ou combinaison d'instructions d'alerte.

Ainsi, selon ce mode de réalisation, un programme d'alerte est préalablement écrit en mémoire du dispositif électronique, dans une zone spécifique protégée, c'est-à-dire lisible et exécutable mais non modifiable, de façon à être invoqué par tout accès à l'instruction d'alerte, ou la combinaison d'instructions d'alerte précédemment décrites.

De cette manière, dès qu'un accès à une portion de zone mémoire désallouée selon la technique de l'invention est effectué, l'instruction d'alerte, ou la combinaison d'instructions d'alerte, est exécutée et un saut est mis en oeuvre vers le programme d'alerte, lequel se lance automatiquement.

Par exemple, l'instruction d'alerte ou la combinaison d'instructions d'alerte correspond à un saut vers le programme d'alerte.

Selon un aspect particulier de l'invention, le programme d'alerte consiste à générer une alerte du type comprenant au moins :
- un signal sonore émis par le dispositif électronique ;
- un signal visuel émis par le dispositif électronique ;
- une désactivation d'au moins une partie du dispositif électronique ;
- une combinaison d'au moins deux des types d'alerte.

Ainsi, selon ce mode de réalisation, un accès à une zone mémoire désallouée selon la technique de l'invention, déclenche une alerte permettant d'informer l'utilisateur du dispositif électronique qu'une tentative d'accès à une zone mémoire désallouée est en cours. Par exemple, l'alerte consiste en l'émission d'un signal sonore ou visuel, ou en la désactivation de tout ou partie du dispositif électronique, mettant ainsi l'utilisateur en alerte. Une combinaison de plusieurs de ces types d'alerte peut bien sûr être mise en oeuvre.

Selon une caractéristique particulière de l'invention, une zone mémoire marquée sécurisée peut être allouée et une zone mémoire marquée non sécurisée ne peut pas être allouée et une zone mémoire non marquée est allouée en priorité par rapport à une zone mémoire marquée sécurisée.

Ainsi, selon ce mode de réalisation, des règles d'allocation particulières peuvent être définies de manière à renforcer la sécurisation d'une zone mémoire par le procédé selon l'invention, en interdisant l'allocation d'une zone mémoire non totalement sécurisée (cas où sa taille est supérieure à un seuil et nécessite des itérations différées de l'étape de remplacement des octets par une ou plusieurs instructions d'alerte) et en rendant non prioritaire une zone marquée sécurisée, par rapport à une zone non marquée.

De cette manière, le système d'exploitation du dispositif électronique peut mettre en oeuvre des priorités d'allocation tenant compte des marquages différents définis par le procédé selon l'invention.

L'invention concerne également un module de sécurisation d'au moins une zone mémoire d'un dispositif électronique, comprenant :
- un module de détection d'une désallocation d'au moins une portion de la zone mémoire, dite portion désallouée ;
- un module de remplacement d'au moins une partie de la portion désallouée par au moins une instruction prédéterminée, dite instruction d'alerte, ou au moins une combinaison d'instructions prédéterminées, dite combinaison d'instructions d'alerte ;
- un module de marquage de la portion désallouée.

Un tel module de sécurisation est notamment adapté à mettre en oeuvre le procédé de sécurisation décrit précédemment.

Ce module de sécurisation pourra bien sûr comporter les différentes caractéristiques relatives au procédé de sécurisation selon l'invention qui peuvent être combinées ou prises isolément. Ainsi, les caractéristiques et avantages de ce module de sécurisation sont les mêmes que ceux du procédé de sécurisation et ne sont pas détaillées plus amplement.

L'invention concerne également un dispositif électronique comprenant un module de sécurisation décrit précédemment.

L'invention concerne un ou plusieurs produits programmes d'ordinateur téléchargeables depuis au moins un réseau de communication et/ou enregistrés sur un support lisible par ordinateur et/ou exécutables par un processeur, comprenant des instructions de code de programme pour la mise en oeuvre d'au moins certaines étapes du procédé de sécurisation décrit précédemment.

Finalement, l'invention concerne un support d'enregistrement lisible par un ordinateur sur lequel est enregistré un programme d'ordinateur comprenant des instructions pour l'exécution des étapes du procédé de sécurisation décrit précédemment.

### 4. Figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :
- La figure 1 illustre les principales étapes du procédé de sécurisation d'une zone mémoire, selon un mode de réalisation de l'invention ;
- les figures 2a et 2b illustrent deux exemples de mémoire désallouée, selon deux variantes de réalisation de l'invention ;
- la figure 3 illustre un exemple de module de sécurisation selon un mode de réalisation de l'invention.

### 5. Description

### 5.1. Principe général

Le principe général de la technique proposée consiste à modifier le contenu de la pile et du tas lorsqu'une zone mémoire d'un dispositif électronique est désallouée, de façon à ce que tout accès à cette zone mémoire désallouée entraine le lancement d'un programme d'alerte sur le dispositif électronique en question.

La présente invention, selon ses différents modes de réalisation, permet ainsi de résister aux attaques logicielles visant à prendre le contrôle du flot d'exécution d'un programme ou à lire des données résiduelles, dans le cas où l'environnement (du dispositif électronique) ne dispose pas de contre-mesures (par exemple ARM) ni de protection de segmentation (par exemple RTOS). L'invention permet donc d'assurer une protection contre la lecture ou l'utilisation de données résiduelles en mémoire, y compris pour des dispositifs disposant d'une puissance de calcul limitée.

Pour ce faire, la présente invention, selon ses différents modes de réalisation, repose sur les opérations suivantes :
- l'écriture, dans une zone protégée de la mémoire (c'est-à-dire lisible et exécutable mais non modifiable), d'un segment de code dit « programme d'alerte ». Lorsque ce programme est invoqué, il communique un état d'alerte au dispositif électronique, ou à son utilisateur, par exemple en émettant un signal sonore ou visuel, et/ou en bloquant l'utilisation du dispositif électronique ;
- chaque opération de libération de mémoire, ou de désallocation de mémoire, déclenche une opération spécifique d'effacement consistant à remplacer tous les octets de cette zone mémoire libérée par une ou des instructions, dites « d'alerte », permettant d'invoquer le programme d'alerte précité, puis à marquer cette zone mémoire désallouée ;
- des règles d'allocation de mémoire sont définies et permettent au système d'exploitation du dispositif électronique de limiter ou d'interdire l'allocation mémoire d'une zone marquée.

### 5.2. Description d'un mode de réalisation

### 5.2.1. Programme d'alerte

Le principe de l'invention est donc basé sur l'écriture, dans une zone mémoire protégée (lisible et exécutable mais non modifiable) du dispositif électronique, d'un programme d'alerte permettant d'informer le dispositif ou son utilisateur d'une tentative d'accès à une zone mémoire désallouée, afin de résister notamment aux attaques logicielles du type visant à prendre le contrôle du flot d'exécution d'un programme ou à lire des données résiduelles.

Comme déjà décrit ci-dessus, le programme d'alerte peut par exemple émettre un signal sonore ou visuel, destiné à être perçu par l'utilisateur du dispositif électronique de façon à ce que ce dernier mette en oeuvre la procédure adéquate (par exemple l'extinction du dispositif électronique ou une procédure d'alerte visant à désactiver tout ou partie du dispositif électronique). Le programme d'alerte peut également désactiver tout ou partie des fonctionnalités du dispositif électronique, de manière temporaire par exemple, de façon également à alerter l'utilisateur du dispositif électronique tout en empêchant l'entité malintentionnée de parvenir à ses fins.

Comme décrit plus en détails ci-après, ce programme d'alerte est invoqué via une instruction d'alerte, ou une combinaison d'instructions d'alerte, exécutée dès qu'un accès à une zone désallouée est requis.

Ainsi, contrairement aux techniques connues, l'invention permet de protéger contre la lecture ou l'utilisation de données résiduelles sans nécessiter de mémoire virtuelle ni de composants matériels dédiés pour cette sécurisation, rendant ainsi possible sa mise en oeuvre par un dispositif électronique présentant des capacités de calcul restreintes, comme par exemple un terminal de paiement avec un système embarqué.

### 5.2.2. Désallocation et marquage

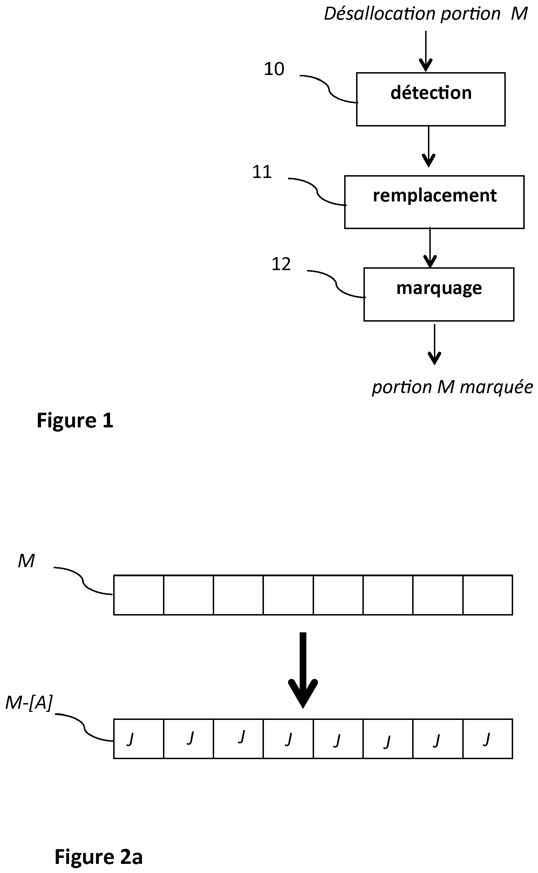

On décrit maintenant les principales étapes de l'invention, en relation avec la figure 1, selon un mode de réalisation de l'invention.

La première étape 10 consiste à détecter une désallocation, ou libération, d'une portion de la zone mémoire du dispositif électronique sécurisée selon l'invention, notée par la suite portion désallouée *M.*

Une telle désallocation mémoire peut se produire notamment dans les situations suivantes :
- lorsqu'un programme demande explicitement la désallocation d'une zone mémoire lui ayant été précédemment allouée ;
- lorsqu'une fonction termine et que ses variables locales sont effacées de la pile ;
- lorsqu'un programme termine son exécution pour quelque raison que ce soit.

Lorsque l'un de ces événements se produit, il est détecté par le procédé de l'invention et les étapes suivantes sont mises en oeuvre :
- le remplacement 11 de tout ou partie de la portion désallouée *M* par une ou plusieurs instructions d'alerte, notée *J* ;
- le marquage 12 de la portion désallouée *M,* délivrant une portion désallouée *M* marquée, selon deux types de marqueur décrits ci-après et notés « *zone mémoire sécurisée* » et « *zone mémoire non sécurisée ».*

Par exemple, l'instruction d'alerte *J* est une instruction de saut (« *jmp* ») pointant vers le programme d'alerte décrit précédemment.

Alternativement, *J* peut correspondre à une combinaison d'instructions dont la finalité est de lancer l'exécution du programme d'alerte.

De plus, l'instruction ou la combinaison d'instructions d'alerte *J* pouvant s'écrire sur un ou plusieurs octets, l'étape de remplacement permet de remplacer chaque octet par une instruction/combinaison d'instructions d'alerte *J* ou de remplacer des groupes d'octets par une instruction/combinaison d'instructions d'alerte *J,* de façon à ce que l'accès à n'importe quelle partie de la portion désallouée *M* exécute un saut vers le programme d'alerte.

Selon une première variante de ce mode de réalisation (illustrée en figure 2a), la portion désallouée *M* présente une taille inférieure à un seuil prédéterminé, permettant d'effectuer son remplacement intégral par une ou plusieurs instructions d'alerte *J,* dès la détection de sa désallocation. Par exemple, ce seuil dépend des capacités de calcul du dispositif électronique, et est défini de façon à ce que le fonctionnement du dispositif électronique ne soit pas pénalisé par la mise en oeuvre de cette étape de remplacement. Par exemple, le seuil est fixé à trente deux octets.

Ainsi, selon cette première variante, toute la portion désallouée *M* est remplacée par une ou plusieurs instructions d'alerte *J* et la portion désallouée *M* est marquée comme « *zone mémoire sécurisée* », ou *M-[A]* comme illustré sur la figure 2a. Ce marquage permet de définir des règles d'allocation sécurisées, comme décrit ci-après.

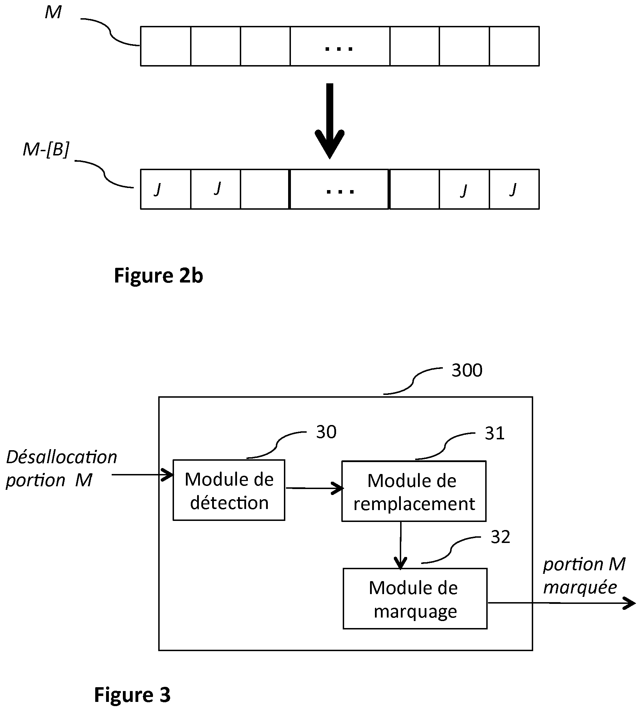

Selon une deuxième variante de ce mode de réalisation (illustrée en figure 2b), la portion désallouée *M* présente une taille supérieure à un seuil prédéterminé, ne pas permettant d'effectuer son remplacement intégral par une ou plusieurs instructions d'alerte *J,* dès la détection de sa désallocation, sans impacter trop le fonctionnement du dispositif électronique. Cette deuxième variante permet donc de différer une partie du remplacement de tous les octets de la zone désallouée *M,* tout en permettant une sécurisation de cette zone par le remplacement d'un certain nombre des premiers octets (par exemple *n*) et d'un certain nombre des derniers octets (par exemple *m*) de la zone désallouée *M.* Le nombre d'octets à remplacer lors de la première étape de remplacement peut par exemple être défini, comme le seuil, en fonction des capacités de calcul du dispositif électronique, de façon à ce que le fonctionnement du dispositif électronique ne soit pas pénalisé par la mise en oeuvre de cette première étape de remplacement. Ainsi, la première étape de remplacement peut remplacer par exemple les seize premiers et les seize derniers octets de la zone désallouée *M.* Il est également possible de ne pas remplacer le même nombre de premier octets que de derniers octets.

De plus, tant que tous les octets de la zone désallouée *M* ne sont pas remplacés par des instructions d'alerte *J,* la zone désallouée *M* est marquée comme « *zone mémoire non sécurisée »,* ou *M-[B]* comme illustré sur la figure 2a. Un tel marquage peut par exemple correspondre à un marquage connu de type « NX » (ou « *Never eXecute* » en anglais). Comme indiqué précédemment, le marquage permet de définir des règles d'allocation sécurisées, comme décrit ci-après.

Selon cette deuxième variante de réalisation, dès que le dispositif électronique dispose de temps pour continuer et terminer le remplacement des octets de la zone désallouée *M* par des instructions d'alerte *J,* des étapes de remplacement sont mises en oeuvre, au fur et à mesure du fonctionnement du dispositif électronique, de façon à obtenir un remplacement total de la zone désallouée *M.* Une fois ce remplacement total effectué, le marquage de cette zone désallouée *M,* temporairement marquée comme « *zone mémoire non sécurisée* » ou *M-[B],* est modifié pour marquer la zone désallouée *M* comme « *zone mémoire sécurisée* », ou *M-[A].*

### 5.2.3. Règles d'allocation

Comme déjà indiqué ci-dessus, le marquage des zones mémoire désallouées, selon les différents modes de réalisation de l'invention, permet de définir des règles d'allocation de zones mémoire renforçant la sécurisation de ces zones mémoire.

Ainsi, le système d'exploitation, qui a seul accès à ces marquages de zones mémoire, en tient compte pour répondre à une requête d'allocation de zone mémoire.

Par exemple, l'allocation d'une zone mémoire obéit aux règles suivantes :
- les zones non marquées sont allouées en priorité, de manière à limiter l'efficacité d'attaques de type « *use-after-free »,* attaque consistant à exploiter une vulnérabilité de certains programmes qui tentent d'utiliser un objet après l'avoir supprimé. En effet, l'objet ayant été supprimé, mais la désallocation classique n'effaçant pas la mémoire correspondante, le code de l'objet est encore présent en mémoire et une entité malintentionnée peut (par exemple avec une technique consistant à allouer un maximum de mémoire par petits morceaux) écrire dans la zone de l'objet. Le programme victime exécute alors le code de l'entité malintentionnée au lieu du code objet ;
- une zone marquée selon la première variante de réalisation décrite ci-dessus, c'est-à-dire une zone marquée comme « *zone mémoire sécurisée »* (ou *M-[A]* comme illustré en figure 2a) peut être allouée, si aucune zone marquée n'est disponible ;
- une zone marquée comme « *zone mémoire non sécurisée »* (ou *M-[B]* comme illustré en figure 2b) ne peut pas être allouée, de manière à empêcher le vol d'informations résiduelles par un autre programme.

Si le système d'exploitation et le matériel le permettent, la protection peut être encore renforcée en interdisant l'exécution de toute instruction située dans une zone mémoire marquée comme « *zone mémoire non sécurisée »* (ou *M-[B]*), c'est-à-dire que ce marquage correspond à un marquage de type « NX ».

### 5.3. Description d'un exemple de module de sécurisation

La figure 3 présente enfin un exemple de structure du module de sécurisation 300, permettant la mise en oeuvre du procédé de la figure 1.

Selon un mode de réalisation de l'invention, un module de sécurisation d'au moins une zone mémoire d'un dispositif électronique comprend :
- un module 30 de détection d'une désallocation d'au moins une portion de la zone mémoire, dite portion désallouée *M* ;
- un module 31 de remplacement d'au moins une partie de la portion désallouée *M* par au moins une instruction prédéterminée, dite instruction d'alerte *J,* ou au moins une combinaison d'instructions prédéterminées, dite combinaison d'instructions d'alerte ;
- un module 32 de marquage de la portion désallouée *M.*

La figure 3 illustre seulement une manière particulière, parmi plusieurs possibles, de réaliser l'algorithme détaillé ci-dessus, en relation avec la figure 1. En effet, la technique de l'invention se réalise indifféremment sur une machine de calcul reprogrammable exécutant un programme comprenant une séquence d'instructions, ou sur une machine de calcul dédiée, et plus particulièrement dans un dispositif électronique disposant de capacités de calcul restreintes.

## Revendications

1. Procédé de sécurisation d'au moins une zone mémoire d'un dispositif électronique comprenant les étapes suivantes :
• détection (10) d'une désallocation d'au moins une portion de ladite zone mémoire, dite portion désallouée (*M*) ;
• remplacement (11) d'au moins une partie de ladite portion désallouée (*M*) par au moins une instruction prédéterminée, dite instruction d'alerte (*J*), ou au moins une combinaison d'instructions prédéterminées, dite combinaison d'instructions d'alerte ;
• marquage (12) de ladite portion désallouée (*M*)*.*

2. Procédé de sécurisation selon la revendication 1, **caractérisé en ce qu'**il comprend une étape préalable de détermination de la taille de ladite portion désallouée et **en ce que** :
• lorsque ladite taille déterminée est inférieure à un seuil prédéterminé, ladite étape de remplacement remplace tous les octets de ladite portion désallouée par au moins une instruction d'alerte ou au moins une combinaison d'instructions d'alerte, et ledit marquage délivre une zone mémoire marquée sécurisée ;
• lorsque ladite taille déterminée est supérieure à un seuil prédéterminé, ladite étape de remplacement remplace au moins les *n* premiers et les *m* derniers octets de ladite portion désallouée par au moins une instruction d'alerte ou au moins une combinaison d'instructions d'alerte, avec *n* et *m* des entiers prédéterminés supérieurs à zéro, et ledit marquage délivre une zone mémoire marquée non sécurisée.

3. Procédé de sécurisation selon la revendication 2, **caractérisé en ce que**, lorsque ladite taille déterminée est supérieure à un seuil prédéterminé, ledit procédé comprend :
• un nombre prédéterminé d'itérations de ladite étape de remplacement, ledit nombre prédéterminé d'itérations étant adapté pour remplacer tous les octets de ladite portion désallouée, et,
• lorsque tous les octets de ladite portion désallouée sont remplacés, une étape de modification du marquage de ladite portion désallouée délivrant une zone mémoire marquée sécurisée.

4. Procédé de sécurisation selon la revendication 1, **caractérisé en ce qu'**il comprend une étape préalable d'écriture, dans au moins une zone mémoire protégée dudit dispositif électronique, distincte de ladite zone mémoire à sécuriser, d'au moins un programme d'alerte exécuté via l'exécution de ladite instruction d'alerte ou combinaison d'instructions d'alerte.

5. Procédé de sécurisation selon la revendication 4, **caractérisé en ce que** ladite instruction d'alerte ou ladite combinaison d'instructions d'alerte correspond à un saut vers ledit programme d'alerte.

6. Procédé de sécurisation selon la revendication 4, **caractérisé en ce que** ledit programme d'alerte consiste à générer une alerte du type comprenant au moins :
• un signal sonore émis par ledit dispositif électronique ;
• un signal visuel émis par ledit dispositif électronique ;
• une désactivation d'au moins une partie dudit dispositif électronique ;
• une combinaison d'au moins deux desdits types d'alerte.

7. Procédé de sécurisation selon la revendication 2, **caractérisé en ce qu'**une zone mémoire marquée sécurisée peut être allouée et une zone mémoire marquée non sécurisée ne peut pas être allouée et **en ce qu'**une zone mémoire non marquée est allouée en priorité par rapport à une zone mémoire marquée sécurisée.

8. Module de sécurisation (300) d'au moins une zone mémoire d'un dispositif électronique comprenant:
• un module de détection (30) d'une désallocation d'au moins une portion de ladite zone mémoire, dite portion désallouée (*M*) ;
• un module de remplacement (31) d'au moins une partie de ladite portion désallouée (*M*) par au moins une instruction prédéterminée, dite instruction d'alerte (*J*), ou au moins une combinaison d'instructions prédéterminées, dite combinaison d'instructions d'alerte ;
• un module de marquage (32) de ladite portion désallouée (*M*)*.*

9. Dispositif électronique comprenant un module de sécurisation selon la revendication 8.

10. Produit programme d'ordinateur comportant des instructions pour l'exécution des étapes du procédé de sécurisation selon l'une quelconque des revendications 1 à 7 lorsque ledit programme est exécuté par un ordinateur.

11. Support d'enregistrement lisible par un ordinateur sur lequel est enregistré un programme d'ordinateur comprenant des instructions pour l'exécution des étapes du procédé de sécurisation selon l'une quelconque des revendications 1 à 7.

## Patentansprüche

1. Verfahren zum Sichern einer Speicherzone einer elektronischen Vorrichtung, umfassend die folgenden Schritte:
• Erfassen (10) einer Fehlzuordnung von mindestens einem Bereich der Speicherzone, der fehlzugeordneter Bereich (*M*) genannt wird,
• Ersetzen (11) von mindestens einem Teil des fehlzugeordneten Bereichs (*M*) durch mindestens eine vorbestimmte Anweisung, die Warnanweisung (*J*) genannt wird, oder mindestens eine Kombination von vorbestimmten Anweisungen, die Warnanweisungen genannt werden,
• Kennzeichnen (12) des fehlzugeordneten Bereichs (*M*)*.*

2. Verfahren zum Sichern nach Anspruch 1, **dadurch gekennzeichnet, dass** es einen vorhergehenden Schritt des Bestimmens der Größe des fehlzugeordneten Bereichs aufweist und dadurch, dass:
• wenn die bestimmte Größe unter einem vorbestimmten Schwellenwert liegt, der Schritt des Ersetzens alle Bytes des fehlzugeordneten Bereichs durch mindestens eine Warnanweisung oder mindestens eine Kombination von Warnanweisungen ersetzt und das Kennzeichnen eine gesicherte gekennzeichnete Speicherzone bereitstellt,
• wenn die bestimmte Größe über einem vorbestimmten Schwellenwert liegt, der Schritt des Ersetzens mindestens die *n* ersten und die *m* letzten Bytes des fehlzugeordneten Bereichs durch mindestens eine Warnanweisung oder mindestens eine Kombination von Warnanweisungen durch *n* und *m* der vorbestimmten ganzen Zahlen, die größer als Null sind, ersetzt und das Kennzeichnen eine nicht gesicherte gekennzeichnete Speicherzone bereitstellt.

3. Verfahren zum Sichern nach Anspruch 2, **dadurch gekennzeichnet, dass**, wenn die bestimmte Größe über einem vorbestimmten Schwellenwert liegt, das Verfahren aufweist:
• eine vorbestimmte Anzahl von Wiederholungen des Schrittes des Ersetzens, wobei die vorbestimmte Anzahl von Wiederholungen geeignet ist, um alle Bytes des fehlzugeordneten Bereichs zu ersetzen und,
• wenn alle Bytes des fehlzugeordneten Bereichs ersetzt werden, einen Schritt des Änderns der Kennzeichnung des fehlzugeordneten Bereichs, wodurch eine gesicherte gekennzeichnete Speicherzone bereitgestellt wird.

4. Verfahren zum Sichern nach Anspruch 1, **dadurch gekennzeichnet, dass** es einen vorhergehenden Schritt des Schreibens in mindestens eine gesicherte Speicherzone der elektronischen Vorrichtung, die von der zu sichernden Speicherzone verschieden ist, von mindestens einem Warnprogramm, das über das Ausführen der Warnanweisung oder Kombination von Warnanweisungen ausgeführt wird.

5. Verfahren zum Sichern nach Anspruch 4, **dadurch gekennzeichnet, dass** die Warnanweisung oder Kombination von Warnanweisungen einem Sprung zum Warnprogramm entspricht.

6. Verfahren zum Sichern nach Anspruch 4, **dadurch gekennzeichnet, dass** das Warnprogramm darin besteht, eine Warnung des Typs zu generieren, umfassend mindestens:
• ein akustisches Signal, das von der elektronischen Vorrichtung gesendet wird,
• ein optisches Signal, das von der elektronischen Vorrichtung gesendet wird,
• ein Deaktivieren von mindestens einem Teil der elektronischen Vorrichtung,
• eine Kombination von mindestens zwei der Alarmarten.

7. Verfahren zum Sichern nach Anspruch 2, **dadurch gekennzeichnet, dass** eine gesicherte gekennzeichnete Speicherzone zugeordnet werden kann und eine nicht gesicherte gekennzeichnete Speicherzone nicht zugeordnet werden kann und dadurch, dass eine nicht gekennzeichnete Speicherzone vorrangig vor einer gesicherten gekennzeichneten Speicherzone zugeordnet wird.

8. Modul zum Sichern (300) von mindestens einer Speicherzone einer elektronischen Vorrichtung, umfassend:
• ein Modul zum Erfassen (30) einer Fehlzuordnung von mindestens einem Bereich der Speicherzone, der fehlzugeordneter Bereich (*M*) genannt wird,
• ein Modul zum Ersetzen (31) von mindestens einem Teil des fehlzugeordneten Bereichs (*M*) durch mindestens eine vorbestimmte Anweisung, die Warnanweisung (*J*) genannt wird, oder mindestens eine Kombination von vorbestimmten Anweisungen, die Warnanweisungen genannt werden,
• ein Modul zum Kennzeichnen (32) des fehlzugeordneten Bereichs (*M*)*.*

9. Elektronische Vorrichtung, umfassend ein Modul zum Sichern nach Anspruch 8.

10. Computerprogrammprodukt, das Anweisungen für die Ausführung der Schritte des Verfahrens zum Sichern nach einem der Ansprüche 1 bis 7 aufweist, wenn das Programm von einem Computer ausgeführt wird.

11. Computerlesbares Aufzeichnungsmedium, auf dem ein Computerprogramm aufgezeichnet ist, das Anweisungen für die Ausführung der Schritte des Verfahrens zum Sichern nach einem der Ansprüche 1 bis 7 aufweist.

## Claims

1. Method for securing at least one memory zone of an electronic device comprising the following steps:
• detecting (10) a deallocation of at least one portion of said memory zone, called a deallocated portion (*M*);
• replacing (11) at least one part of said deallocated portion (*M*) with at least one predetermined instruction, called an alert instruction (*J*), or at least one combination of predetermined instructions, called a combination of alert instructions;
• marking (12) said deallocated portion (M).

2. Method for securing according to claim 1, **characterized in that** comprises a preliminary step for determining the size of said deallocated portion, and **in that**:
• when said determined size is below a predetermined threshold, said replacing step replaces all the bytes of said deallocated portion by at least one alert instruction or at least one combination of alert instructions, and said marking delivers a secured marked memory zone;
• when said determined size is above a predetermined threshold, said replacing step replaces at least the *n* first and the *m* last bytes of said deallocated portion by at least one alert instruction or at least one combination of alert instructions, with *n* and *m* being predetermined integers greater than zero, and said marking delivers an unsecured marked memory zone.

3. Method for securing according to claim 2 **characterized in that**, when said determined size is above a predetermined threshold, said method for securing comprises:
• a predetermined number of iterations of said replacing step, said predetermined number of iterations being adapted to replacing all the bytes of said deallocated portion, and,
• when all the bytes of said deallocated portion are replaced, a step for modifying the marking of said deallocated portion delivering a secured marked memory zone.

4. Method for securing according to claim 1, **characterized in that** it comprises a preliminary step of writing, to at least one protected memory zone of said electronic device distinct from said memory zone to be secured, of at least one alerting program executed via the execution of said alert instruction or combination of alert instructions.

5. Method for securing according to claim 4, **characterized in that** said alert instruction or said combination of alert instructions corresponds to a jump towards said alerting program.

6. Method for securing according to claim 4, **characterized in that** said alerting program consists of the generation of an alert of the type comprising at least:
• a sound signal emitted by said electronic device;
• a visual signal emitted by said electronic device;
• a deactivation of at least one part of said electronic device;
• a combination of at least two of said types of alert.

7. Method for securing according to claim 2, **characterized in that** a secured memory zone marked as being secured can be allocated and a memory zone marked as being unsecured cannot be allocated and **in that** an unmarked memory zone is allocated by priority over a memory zone marked as being secured.

8. Module (300) for securing at least one memory zone of an electronic device comprising:
• a module (30) for detecting a deallocation of at least one portion of said memory zone, called a deallocated portion (*M*);
• a module (31) for replacing at least one part of said deallocated portion (*M*) by at least one predetermined instruction, called an alert instruction (*J*), or at least one predetermined combination of instructions, called a combination of alert instructions;
• a module (32) for marking said deallocated portion (*M*)*.*

9. Electronic device comprising a module for securing according to claim 8.

10. Computer program product comprising instructions for executing the steps of the method for securing according to any one of the claims 1 to 7 when said program is executed by a computer.

11. Computer-readable medium on which there is stored a computer program comprising instructions for the execution of the steps of the method for securing according to any one of the claims 1 to 7.
